# FASCICULE DE BREVET EUROPEEN

(11) **EP 3 840 174 B1**
(45) Date de publication et mention de la délivrance du brevet: **29.06.2022**
(21) Numéro de dépôt: 20211756.0
(22) Date de dépôt: 04.12.2020
(51) Int. Cl.: G06K 19/07, H02J 50/20, H02J 50/80

(54) **PROCÉDÉ DE GESTION D'ALIMENTATION**
ZULEITUNGSMANAGEMENTVERFAHREN
POWER SUPPLY MANAGEMENT METHOD

(30) Priorité: 19.12.2019 FR 1914965
(43) Date de publication de la demande: 23.06.2021
(73) Titulaire: STMicroelectronics (Rousset) SAS, 13790 Rousset (FR); STMicroelectronics (ALPS) SAS, 38000 Grenoble (FR)
(72) Inventeur: MERCIER, Julien, 13105 MIMET (FR); NONIER, Pascal, 38330 SAINT-ISMIER (FR)
(74) Mandataire: Cabinet Beaumont

(56) Documents cités:
- EP-A1- 3 418 963
- US-A1- 2010 253 315
- US-B1- 7 733 227

## Description

### Domaine technique

La présente description concerne de façon générale les dispositifs électroniques et, plus particulièrement, les cartes alimentées par un champ électromagnétique externe.

### Technique antérieure

On connaît de nombreuses applications dans lesquelles un dispositif électronique est dépourvu d'alimentation interne, de sorte que des circuits embarqués sur ce dispositif ne peuvent être activés que lorsqu'une énergie suffisante leur est fournie, de façon externe, par un autre dispositif. C'est notamment le cas de certaines cartes sans contact qui puisent, généralement à partir d'un champ électromagnétique émis par un lecteur situé à portée, l'énergie électrique nécessaire à l'alimentation de leurs circuits. Ces circuits disposent, le cas échéant, d'une puissance électrique limitée qu'il convient de gérer au mieux pour garantir un fonctionnement optimal du dispositif dont ils font partie.

Le document US 7733227 décrit des circuits d'étiquettes RFID et des procédés de détection d'une puissance propre afin de prévoir la faisabilité d'une action demandée.

Le document US 2010/253315 décrit un indicateur de niveau de puissance.

### Résumé de l'invention

Il existe un besoin d'améliorer les procédés de gestion d'alimentation des dispositifs électroniques dépourvus d'alimentation interne.

Un mode de réalisation pallie tout ou partie des inconvénients des procédés de gestion d'alimentation connus.

Un mode de réalisation prévoit un procédé de gestion d'alimentation d'un ou plusieurs premiers éléments par un deuxième élément d'un même premier dispositif, comprenant les étapes consistant à :
envoyer, à un deuxième dispositif, une demande d'extension de temps ;
évaluer, pendant l'extension de temps, une puissance disponible à partir d'un champ électromagnétique rayonné par le deuxième dispositif ; et
adapter l'alimentation du deuxième élément et du ou des premiers éléments en fonction de la puissance disponible.

Selon un mode de réalisation, le deuxième élément est téléalimenté par l'intermédiaire du champ.

Selon un mode de réalisation, le deuxième élément est un circuit électronique sécurisé.

Selon un mode de réalisation, le deuxième élément effectue les étapes d'envoi de la demande de l'extension de temps, d'évaluation de la puissance et d'adaptation de l'alimentation.

Selon un mode de réalisation, le premier dispositif comporte exactement deux premiers éléments, les premiers éléments étant, de préférence, un microcontrôleur et un capteur d'empreintes digitales.

Selon un mode de réalisation :
le premier dispositif est une carte, de préférence une carte de paiement sans contact ; et
le deuxième dispositif est un lecteur, de préférence un terminal de paiement sans contact.

Selon un mode de réalisation, le ou les premiers éléments sont alimentés sous une tension comprise entre 1 V et 5,5 V.

Selon un mode de réalisation, le deuxième élément comporte un composant configuré pour évaluer un courant disponible à partir du champ rayonné par le deuxième dispositif.

Selon un mode de réalisation, le deuxième élément comporte un interrupteur configuré pour couper l'alimentation du ou des premiers éléments.

Selon un mode de réalisation, l'interrupteur est piloté par un régulateur de tension activé en fonction d'un état du composant d'évaluation du courant.

Selon un mode de réalisation, le ou les premiers éléments sont alimentés :
par un condensateur, lorsque l'interrupteur est ouvert ; et
par le régulateur de tension, lorsque l'interrupteur est fermé.

Selon un mode de réalisation, le deuxième élément ouvre l'interrupteur en cas de consommation excessive du ou des deuxièmes éléments.

Selon un mode de réalisation, le deuxième élément est mis en mode basse consommation pendant l'évaluation de la puissance disponible.

Selon un mode de réalisation, la puissance disponible est évaluée après d'autres extensions de temps, l'alimentation du ou des premiers éléments étant adaptée en fonction de chaque évaluation de la puissance disponible.

Selon un mode de réalisation, lorsque le ou les premiers éléments sont alimentés, le deuxième élément ajuste une fréquence de fonctionnement du deuxième élément et une fréquence de fonctionnement du ou des premiers éléments en fonction de la puissance disponible.

Un mode de réalisation prévoit un circuit électronique sécurisé configuré pour mettre en œuvre le procédé tel que décrit.

Un mode de réalisation prévoit une carte électronique sans contact comprenant au moins un circuit tel que décrit.

### Brève description des dessins

Ces caractéristiques et avantages, ainsi que d'autres, seront exposés en détail dans la description suivante de modes de réalisation et modes de mise en œuvre particuliers faite à titre non limitatif en relation avec les figures jointes parmi lesquelles :
La figure 1 représente, de façon très schématique et sous forme de blocs, un exemple de système de communication en champ proche du type auquel s'appliquent, à titre d'exemple, des modes de réalisation décrits ;
La figure 2 est un chronogramme d'un exemple de communication radiofréquence ;
La figure 3 est un chronogramme d'un autre exemple de communication radiofréquence ;
La figure 4 représente, de façon schématique et sous forme de blocs, un exemple de carte ;
La figure 5 est un chronogramme d'un exemple d'évolution d'état d'un élément de la carte de la figure 4 au cours d'une communication radiofréquence avec un lecteur ;
La figure 6 représente, de façon schématique et sous forme de blocs, un mode de réalisation d'une carte ;
La figure 7 est un chronogramme d'un mode de mise en œuvre d'un procédé de gestion d'alimentation de la carte de la figure 6 ;
La figure 8 représente, de façon schématique et sous forme de blocs, un mode de réalisation d'une architecture d'alimentation de la carte de la figure 6 ;
La figure 9 est un autre chronogramme du procédé de gestion d'alimentation de la figure 7 selon un mode de mise en œuvre ; et
La figure 10 est encore un autre chronogramme du procédé de gestion d'alimentation de la figure 7 selon un mode de mise en œuvre.

### Description des modes de réalisation

De mêmes éléments ont été désignés par de mêmes références dans les différentes figures. En particulier, les éléments structurels et/ou fonctionnels communs aux différents modes de réalisation et modes de mise en œuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en œuvre décrits ont été représentés et sont détaillés. En particulier, les commandes qui sont exécutées ne sont pas détaillées, les modes de réalisation et modes de mise en œuvre décrits étant compatibles avec les commandes usuellement exécutées par des cartes sans contact.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures.

Sauf précision contraire, les expressions "environ", "approximativement", "sensiblement", et "de l'ordre de" signifient à 10 % près, de préférence à 5 % près.

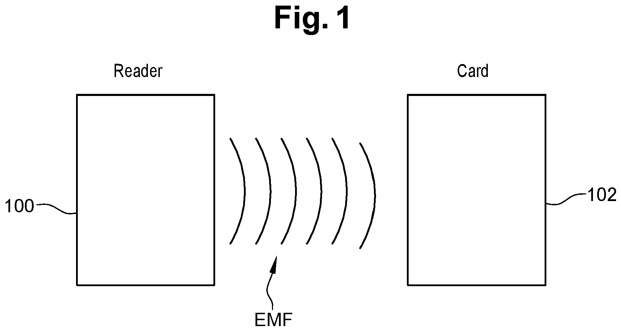

La figure 1 représente, de façon très schématique et sous forme de blocs, un exemple de système de communication en champ proche du type auquel s'appliquent, à titre d'exemple, les modes de réalisation décrits.

Dans l'exemple de la figure 1, un premier dispositif ou lecteur 100 (Reader), par exemple un terminal de paiement, un téléphone portable, une borne de lecture, etc., rayonne un champ électromagnétique radiofréquence EMF capté par un deuxième dispositif ou carte 102 (Card), par exemple une carte de paiement sans contact, une carte d'accès personnel, une carte de transport, etc.

Dans le cas d'une communication radiofréquence, le lecteur 100 détecte la présence de la carte 102 dans son champ EMF, puis entame une procédure de communication comprenant des échanges de requêtes par le lecteur 100 et de réponses par la carte 102. Une telle communication, qu'elle soit effectuée dans le domaine des transactions bancaires, de l'identification, des transports, de la gestion d'accès, etc., est généralement basée sur la norme ISO 14443, par exemple dans sa version de 2018, et met en œuvre des protocoles standardisés d'échanges entre le lecteur 100 et la carte 102 située à portée.

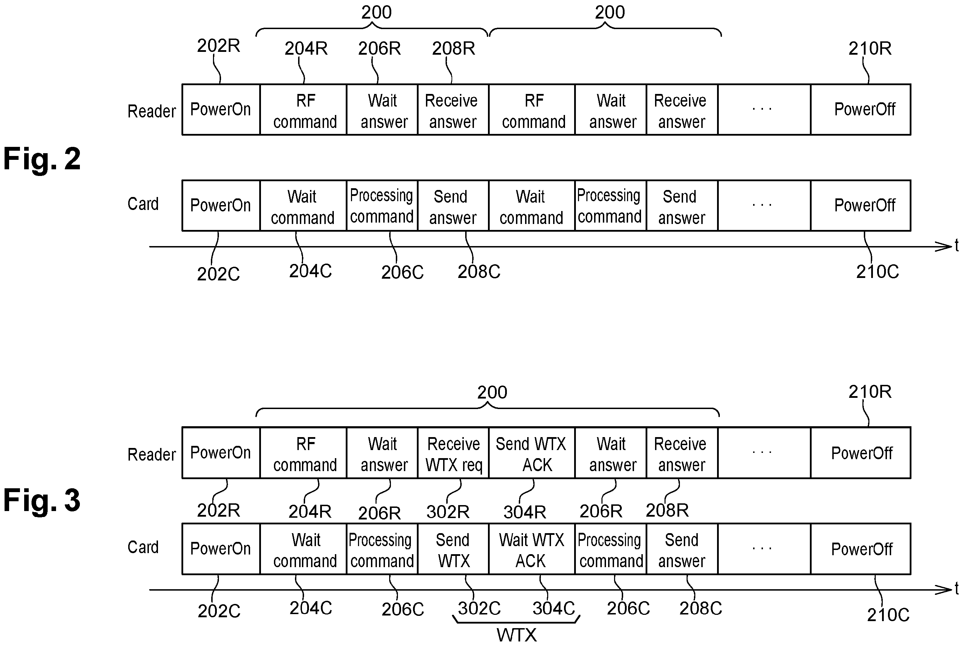

La figure 2 est un chronogramme d'un exemple de communication radiofréquence entre le lecteur 100 (Reader) et la carte 102 (Card) de la figure 1.

Après une mise sous tension 202R, 202C (PowerOn) du lecteur 100 et de la carte 102, le lecteur 100 entame une phase de communication 200 en envoyant 204R (RF command) une commande radiofréquence (RF) à la carte 102, qui est en attente 204C (Wait command) de réception d'une commande. Puis, la carte 102 exécute 206C (Processing command) la commande, le lecteur 100 étant en attente 206R (Wait answer) d'une réponse de la part de la carte 102. Une fois la commande exécutée, la carte 102 envoie 208C (Send answer) une réponse au lecteur 100, qui reçoit 208R (Receive answer) cette réponse. Cela achève la phase de communication 200. Une ou plusieurs autres phases de communication 200 peuvent ensuite avoir lieu avant une mise hors tension 210R, 210C (PowerOff) du lecteur 100 et de la carte 102.

En général, le lecteur 100 alloue à la carte 102 une durée maximale, par exemple de 38 ms, pour l'exécution 206C de chaque commande. Il est toutefois généralement prévu que la carte 102 puisse parfois demander au lecteur 100 de lui accorder une extension de temps WTX (en anglais, Wait Time eXtension), autrement dit un délai supplémentaire, comme exposé ci-dessous en relation avec la figure 3.

La figure 3 est un chronogramme d'un autre exemple de communication radiofréquence entre le lecteur 100 (Reader) et la carte 102 (Card) de la figure 1. Le chronogramme de la figure 3 comporte des éléments communs avec le chronogramme de la figure 2. Ces éléments communs ne seront pas décrits à nouveau ci-après.

Dans le chronogramme de la figure 3, par rapport au chronogramme de la figure 2, la phase d'exécution 206C (Processing command) de la commande par la carte 102 est prolongée. Cette prolongation, à l'initiative de la carte 102, résulte d'un envoi 302C (Send WTX) d'une demande ou requête d'extension de temps WTX au lecteur 100, qui reçoit 302R (Receive WTX req) cette demande. En réponse, le lecteur 100 envoie 304R (Send WTX ACK) un accusé de réception ACK, ou acquittement, à la carte 102, qui attend 304C (Wait WTX ACK) l'acquittement ACK. La carte 102 poursuit alors l'exécution 206C de la commande, le lecteur 100 étant en attente 206R (Wait answer) de la réponse de la carte 102.

Lors de l'exécution 206C d'une même commande par la carte 102, plusieurs extensions de temps WTX, comprenant les opérations 302C, 302R, 304C et 304R, peuvent être successivement accordées par le lecteur 102. En outre, chaque communication entre le lecteur 100 et la carte 102 peut comporter un nombre quelconque de phases de communication 200, avec ou sans extension de temps WTX, avant la mise hors tension 210R, 210C (PowerOff) du lecteur 100 et de la carte 102.

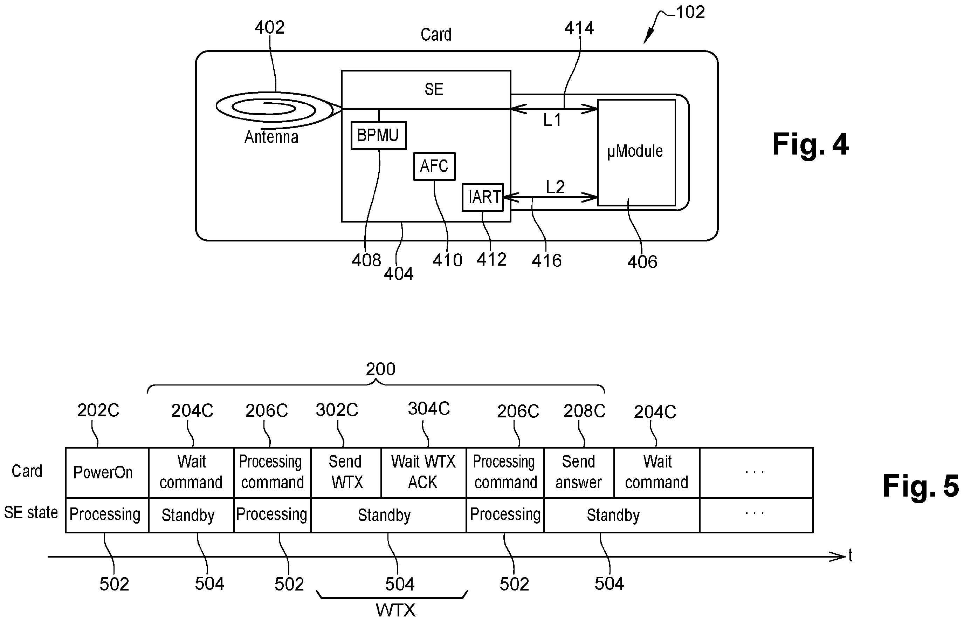

La figure 4 représente, de façon schématique et sous forme de blocs, un exemple de carte 102 (Card) comprenant :
une antenne 402 (Antenna) de communication en champ proche ;
un premier élément sécurisé 404 (SE), par exemple un circuit ou microcontrôleur sécurisé ; et
un module 406 (µModule) de traitement électronique.

Le premier élément 404 comporte :
une macrocellule ou unité de gestion d'énergie 408 (BPMU) en fonction de besoins d'alimentation du premier élément 404 de la carte 102 ;
une autre macrocellule ou unité d'adaptation de fréquence 410 (AFC) permettant d'ajuster, en fonction du champ EMF (figure 1), une fréquence de fonctionnement du premier élément 404 de la carte 102 ; et
encore une autre macrocellule ou unité de communication 412 (IART), par exemple un module émetteur-récepteur asynchrone (en anglais Asynchronous Receiver Transmitter).

Le module 406 est relié ou connecté :
au premier élément 404 par une liaison 414 (L1) véhiculant une tension d'alimentation par exemple comprise entre 1 V et 5,5 V ; et
à la macrocellule 412 par une autre liaison 416 (L2) conforme, par exemple, aux exigences de la norme ISO 7816 de 2013 et utilisée pour des communications avec contact.

Lors d'une communication sans contact du type de celles exposées en relation avec les figures 2 et 3, la carte 102 est notamment capable de gérer :
la fréquence de fonctionnement du premier élément 404, grâce à la macrocellule 410 qui adapte cette fréquence en fonction d'une énergie disponible à partir du champ EMF (figure 1) ;
la tension d'alimentation du premier élément 404, grâce à la macrocellule 408 qui adapte cette tension d'alimentation en fonction des besoins d'alimentation du premier élément 404 ; et
plusieurs modes d'alimentation, par exemple un mode nominal, un mode basse consommation, etc.

Pendant les opérations 204C, 208C, 302C, 304C (figure 3) consistant à recevoir ou envoyer des données, par exemple des commandes, des réponses, des demandes d'extension de temps WTX, etc., entre le lecteur 100 et la carte 102, le champ radiofréquence EMF (figure 1) est modulé. Le premier élément 404 de la carte 102 est mis en mode basse consommation, ou mode de veille, pendant ces opérations, c'est-à-dire en dehors des opérations d'exécution 206C d'une commande et de mise sous tension 202C. Pendant les opérations d'exécution 206C d'une commande et de mise sous tension 202C, le premier élément 404 est en mode nominal. Du fait de contraintes d'interopérabilité, on fait généralement en sorte que la carte 102, notamment le premier élément 404, ne produise pas de bruit ou perturbation électronique pendant les opérations 204C, 208C, 302C, 304C (figure 3) consistant à échanger des informations avec le lecteur 100.

La figure 5 est un chronogramme d'un exemple d'évolution d'état (SE state) du premier élément sécurisé 404 de la carte 102 (Card) de la figure 4 au cours d'une communication radiofréquence avec le lecteur 100 (figure 1).

Dans cet exemple, le premier élément 404 est mis :
en mode nominal d'alimentation 502 (Processing), pendant la mise sous tension 202C (PowerOn) de la carte 102 et durant les opérations d'exécution 206C (Processing command) de commandes ; et
en mode basse consommation 504 (Standby) le reste du temps, autrement dit pendant les opérations :
   d'attente 204C d'une commande (Wait command) ;
   d'extension de temps (WTX), autrement dit d'envoi 302C d'une demande d'extension de temps (Send WTX) puis d'attente 304C d'un acquittement ACK (Wait WTX ACK) confirmant que le lecteur 100 accorde l'extension de temps WTX ; et
   d'envoi 208C d'une réponse (Send answer).

Le premier élément 404 gère ses besoins d'alimentation à chaque fois qu'il est commuté depuis ou vers le mode basse consommation 504. En particulier :
à chaque commutation vers le mode basse consommation 504, la macrocellule 410 (figure 4) est désactivée et la macrocellule 408 (figure 4) adapte ou régule la tension d'alimentation pour qu'elle corresponde au mode basse consommation 504 ; et
à chaque commutation vers le mode nominal 502, la macrocellule 410 est activée et la macrocellule 408 adapte ou régule la tension d'alimentation pour qu'elle corresponde au mode nominal 502.

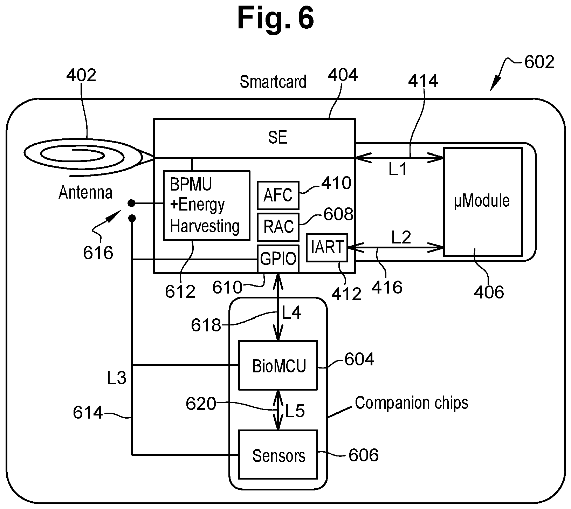

La figure 6 représente, de façon schématique et sous forme de blocs, un mode de réalisation d'une carte 602 (Smartcard), par exemple une carte bancaire de paiement sans contact, une carte d'identité, une carte de transport, une carte d'accès personnel, etc.

La carte 602 est notamment configurée pour communiquer avec un lecteur, de préférence un terminal de paiement, par exemple le lecteur 100 de la figure 1. La carte 602 de la figure 6 comprend des éléments communs avec la carte 102 de la figure 4. Ces éléments communs ne seront pas décrits à nouveau ci-après.

Par rapport à la carte 102 de la figure 4, la carte 602 de la figure 6 comprend notamment un ou plusieurs deuxièmes éléments (Companion chips) additionnels. La carte 602 comporte, de préférence, deux deuxièmes éléments :
un deuxième élément ou microcontrôleur 604 (BioMCU) ; et
un autre deuxième élément ou capteur 606 (Sensors) correspondant, de préférence, à un capteur biométrique, plus préférentiellement un capteur d'empreintes digitales.

On dit que les deuxièmes éléments 604 et 606 forment conjointement un « environnement biométrique », la carte 602 étant alors qualifiée de carte biométrique.

Par rapport au premier élément 404 de la figure 4, le premier élément 404 (SE) de la figure 6 comporte :
une macrocellule ou unité d'évaluation de courant RF 608 (RAC) disponible à partir du champ électromagnétique EMF (figure 1) ; et
des bornes 610 (GPIO) d'entrée-sortie, de préférence universelles (en anglais General Purpose Input-Output).

Le premier élément 404 de la carte 602 est téléalimenté, c'est-à-dire alimenté à distance, par l'intermédiaire du champ EMF rayonné par le lecteur 100 (figure 1).

Dans le premier élément 404 de la figure 6, la macrocellule 408 (figure 4) est remplacée par une macrocellule ou unité de gestion et de collecte d'énergie 612 (BPMU + Energy Harvesting) combinant des fonctionnalités similaires à celles de la macrocellule 408 de la figure 4 et des fonctionnalités supplémentaires de collecte et/ou de répartition d'énergie.

Chaque deuxième élément 604, 606 est relié, de préférence connecté, à la macrocellule 612 du premier élément 404 par une liaison 614 (L3) véhiculant, de préférence, une tension d'alimentation comprise entre 1 V et 5,5 V. Un interrupteur 616 placé en aval de la macrocellule 612 est configuré pour établir ou couper l'alimentation des deuxièmes éléments 604 et 606. Bien que l'interrupteur 616 soit représenté en figure 6 comme ne faisant pas partie de la macrocellule 612, l'interrupteur 616 peut, en pratique, être intégré à la macrocellule 612. En d'autres termes, l'interrupteur 616 est, en figure 6, représenté de manière fonctionnelle.

Le microcontrôleur 604 est relié, de préférence connecté, aux bornes d'entrée-sortie universelles 610 du premier élément 404 par une autre liaison 618 (L4). Cette liaison 618 véhicule, de préférence, un ou plusieurs signaux de communication et/ou d'alimentation entre le premier élément 404 et le microcontrôleur 604.

Le capteur 606 d'empreintes digitales est relié, de préférence connecté, au microcontrôleur 604 par encore une autre liaison 620 (L5). La liaison 620 permet par exemple au capteur 606 d'envoyer au microcontrôleur 604 des données représentatives d'une empreinte digitale acquise sous forme d'image par le capteur 606.

La présence, dans la carte 602, des deuxièmes éléments 604 et 606 complexifie la gestion d'alimentation par rapport à la carte 102 de la figure 4. En effet, la carte biométrique 602 est configurée pour gérer non seulement les besoins énergétiques du premier élément 404, mais aussi ceux des deuxièmes éléments 604 et 606. La carte biométrique 602 gère ainsi les besoins énergétiques de trois éléments, en l'espèce le premier élément 404 et les deux deuxièmes éléments 604 et 606, contre un seul élément, en l'espèce le premier élément 404, pour la carte 102.

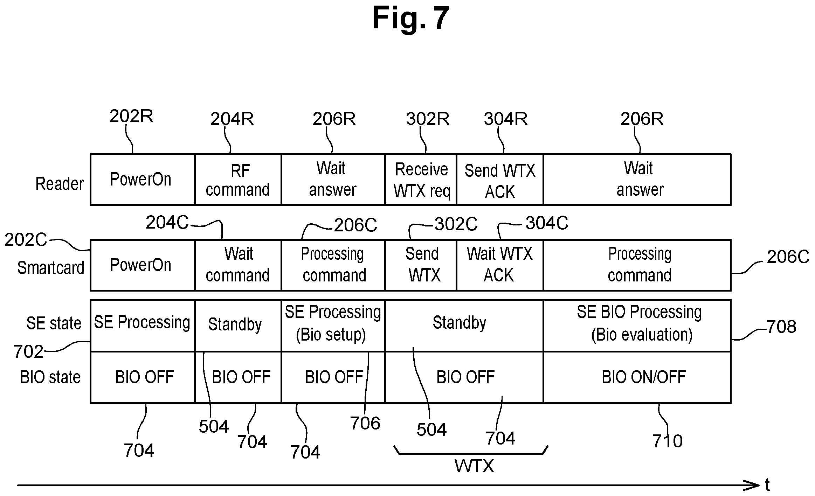

La figure 7 est un chronogramme d'un mode de mise en œuvre d'un procédé de gestion d'alimentation de la carte biométrique 602 (Smartcard) de la figure 6 pendant une communication avec le lecteur 100 (Reader) de la figure 1. Le chronogramme de la figure 7 comporte des éléments communs avec le chronogramme de la figure 5. Ces éléments communs ne seront pas décrits à nouveau ci-après. Dans le chronogramme de la figure 7, une ligne (BIO state) symbolise une évolution d'un état de l'environnement biométrique constitué par les deuxièmes éléments 604, 606 (figure 6).

Selon ce mode de mise en œuvre, on fait en sorte qu'une communication ou transaction utilisant l'environnement biométrique 604, 606 (figure 6) soit perçue, par le lecteur 100 (figure 1), comme étant identique à une communication ou transaction standard, par exemple une communication telle que celle exposée en relation avec la figure 3. Cela permet une rétrocompatibilité avantageuse de la carte 602 (figure 6) avec les lecteurs 100 existants.

La carte biométrique 602 est configurée pour évaluer l'alimentation disponible à partir du champ EMF émis par le lecteur 100. En fonction de cette évaluation, avantageusement gérée de façon transparente pour le lecteur 100, la carte 602 choisit d'alimenter ou non les deuxièmes éléments 604 et 606. L'évaluation de l'alimentation disponible à partir du champ EMF émis par le lecteur 100 est, de préférence, réalisée pendant une période où le premier élément 404 est mis en mode basse consommation 504 (Standby). On obtient ainsi une évaluation plus précise de l'alimentation disponible.

À la mise sous tension 202R, 202C du lecteur 100 et de la carte 602, le premier élément 404 est dans un état actif 702 (SE Processing), ou mode nominal, du premier élément 404, semblable à l'état 502 du chronogramme de la figure 5. L'environnement biométrique 604, 606 est alors hors tension 704 (BIO OFF) et est maintenu dans l'état hors tension 704 jusqu'à nouvel ordre. Dans l'attente 204C (Wait command) de l'envoi 204R (RF command) d'une commande, le premier élément 404 est en mode basse consommation 504 (Standby).

Selon un mode de mise en œuvre préféré, le premier élément 404 déclenche l'envoi 302C (Send WTX) d'une demande d'extension de temps WTX pendant l'exécution 206C (Processing command) d'une commande. Cela provoque le passage du premier élément 404 en mode basse consommation 504. Le premier élément 404 tire profit de ce passage en mode basse consommation 504 pour procéder à l'évaluation de l'alimentation disponible à partir du champ EMF.

Avant l'envoi 302C de la demande d'extension de temps WTX, le premier élément 404 est dans un état de configuration 706 (SE Processing (Bio setup)) de l'environnement biométrique dans lequel il :
détermine une valeur de tension d'alimentation des deuxièmes éléments 604 et 606 et configure la macrocellule 612 (figure 6) de sorte qu'elle délivre, dès la sortie du mode basse consommation 504 après la demande d'extension de temps WTX, une tension d'alimentation égale à cette valeur ;
évalue, par l'intermédiaire de la macrocellule 608, le courant potentiellement disponible à partir du champ EMF pour alimenter les éléments 404, 604 et 606 et décide notamment, en fonction de cette évaluation, d'alimenter ou non (état 710, BIO ON/OFF) les deuxièmes éléments 604, 606 dès la sortie du mode basse consommation 504 après la demande d'extension de temps WTX ; et
désactive la macrocellule 410 dès la sortie du mode basse consommation 504 après la demande d'extension de temps WTX, du fait que la consommation des deuxièmes éléments 604 et 606 n'est pas prévisible.

En sortie du mode basse consommation 504, après la demande d'extension de temps WTX, le premier élément 404 de la carte 602 passe dans un autre état 708 (SE BIO Processing (Bio evaluation)) d'évaluation de la puissance disponible dans lequel :
les deuxièmes éléments 604 et 606 sont alimentés si l'état de la macrocellule 608 est compatible avec les besoins énergétiques des deuxièmes éléments 604 et 606 ; et
la macrocellule 410 est désactivée.

Dans un cas où la puissance disponible est suffisante pour alimenter les deuxièmes éléments 604 et 606, les deuxièmes éléments 604 et 606 sont alors mis sous tension, autrement dit alimentés. Selon un mode de mise en œuvre, lorsque les deuxièmes éléments 604 et 606 sont alimentés, le premier élément 404 ajuste la fréquence de fonctionnement du premier élément 404 et/ou la fréquence de fonctionnement des deuxièmes éléments 604 et 606 en fonction de la puissance disponible.

On aurait pu penser activer les deuxièmes éléments 604 et 606 et gérer leurs besoins énergétiques pendant que le premier élément 404 est en mode nominal 702. Toutefois, cela serait moins fiable et plus complexe à réaliser que lorsque le premier élément 404 est en mode basse consommation 504.

On aurait également pu penser tenter d'activer les deuxièmes éléments 604, 606 dès la mise sous tension 202C de la carte 602. Toutefois, si l'alimentation disponible est insuffisante au moment de la mise sous tension 202C, la carte 602 risque d'être inopérante ce qui tend à dégrader l'expérience utilisateur.

Avant que la carte 602 ne réponde au lecteur 100, le premier élément 404 est rebasculé en mode nominal 702 grâce à une autre demande d'extension de temps WTX.

Le mode de mise en œuvre décrit permet une bonne fiabilité des communications radiofréquence à travers :
une architecture d'alimentation permettant une gestion de bruit radiofréquence isolée de l'alimentation des deuxièmes éléments 604, 606 et une évaluation du champ radiofréquence par la macrocellule 608 dédiée ;
une gestion de l'alimentation, fournie de manière externe, pendant des demandes d'extension de temps WTX durant lesquelles les deuxièmes éléments 604, 606 sont alimentés ; et
une préservation des échanges entre le premier élément 404 et le lecteur 100 même lorsque les deuxièmes éléments 604, 606 sont alimentés.

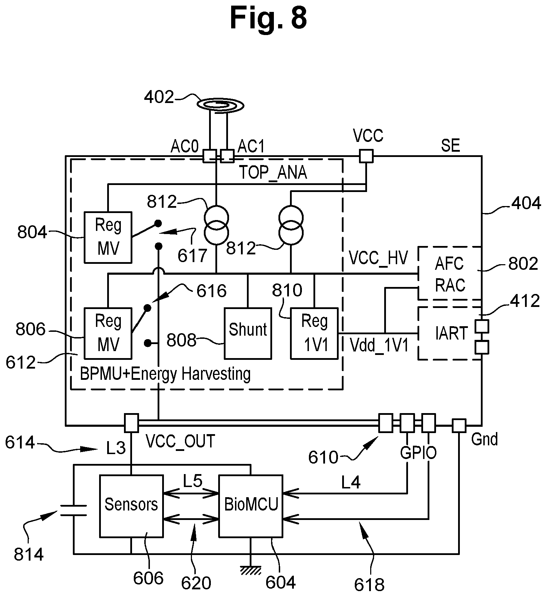

La figure 8 représente, de façon schématique et sous forme de blocs, un mode de réalisation d'une architecture d'alimentation de la carte 602 de la figure 6.

Selon ce mode de réalisation, le premier élément 404 (SE) comporte :
un bloc 802 (AFC RAC) schématisant les macrocellules 410 et 608 de la figure 6 ;
un régulateur de tension 804 (Reg MV) pour l'alimentation avec contact du premier élément 404 et des deuxièmes éléments 604 (BioMCU) et 606 (Sensors) depuis une borne d'application d'un potentiel noté VCC par l'intermédiaire d'une liaison (TOP_ANA) ; et
un autre régulateur de tension 806 (Reg MV) pour l'alimentation sans contact, depuis l'antenne 402 connectée à des bornes (AC0, AC1), des deuxièmes éléments 604 et 606.

Selon un mode de réalisation, les régulateurs de tension 804, 806 font partie de la macrocellule 612 (BPMU + Energy Harvesting) qui comporte en outre :
un bloc 808 (Shunt) destiné à masquer d'éventuelles perturbations électroniques, issues du premier élément 404 et/ou des deuxièmes éléments 604 et 606 dans leurs différents modes de fonctionnement, susceptibles de se propager jusqu'à l'antenne 402 ;
encore un autre régulateur de tension 810 (Reg 1V1) alimenté depuis le bloc 802 et la macrocellule 412 (IART) par une tension notée Vdd_1V1 ; et
des transformateurs 812 reliés, de préférence connectés, à un bus véhiculant une tension d'alimentation (VCC_HV).

Par défaut, les deuxièmes éléments 604 et 606 ne sont pas alimentés. Le régulateur de tension 806 pilote l'interrupteur 616 configuré pour établir ou couper l'alimentation des deuxièmes éléments 604 et 606 lorsque la carte 602 (figure 6) est alimentée en champ proche. Le régulateur 806 est activé en fonction de l'état du composant 802 d'évaluation du courant. Dans le cas d'une communication avec contact, le régulateur de tension 804 pilote un autre interrupteur 617 configuré pour établir ou couper l'alimentation des deuxièmes éléments 604 et 606.

L'alimentation des deuxièmes éléments 604 et 606 est, de préférence, contrôlée par un logiciel en fonction de l'état de la macrocellule 802. Un condensateur 814 est branché en parallèle des deuxièmes éléments 604 et 606. En sortie du mode de veille 504 (figure 7), la tension VCC_HV est ajustée par le bloc 802 en fonction des besoins d'alimentation des deuxièmes éléments 604 et 606.

Les premiers éléments 604, 606 sont alimentés :
par le condensateur 814, lorsque les interrupteurs 616 et 617 sont ouverts ;
par le régulateur de tension 806, lorsque l'interrupteur 616 est fermé dans le cadre d'une alimentation sans contact ; ou
par le régulateur de tension 804, lorsque l'interrupteur 617 est fermé dans le cadre d'une alimentation avec contact.

En figure 8, les deuxièmes éléments 604 et 606 sont alimentés sous une tension, notée VCC_OUT, comprise entre 1 V et 5,5 V. Le deuxième élément 604 est relié, de préférence connecté aux bornes d'entrée-sortie universelles 610 (GPIO). Les deuxièmes éléments 604, 606 sont tous deux reliés, de préférence connectés, à une borne d'application d'un potentiel de référence, par exemple la masse (Gnd).

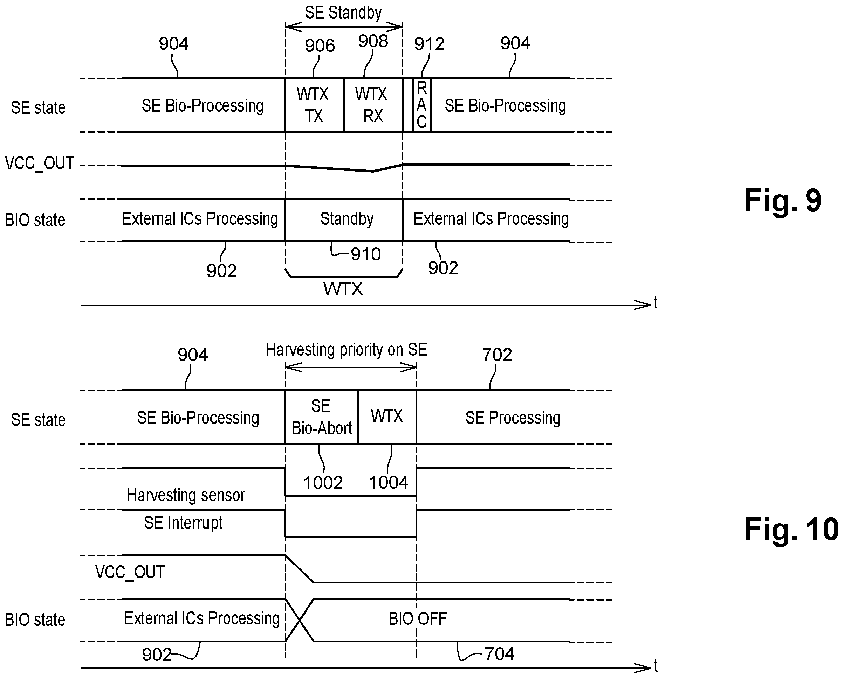

La figure 9 est un autre chronogramme du procédé de gestion d'alimentation de la figure 7 selon un mode de mise en œuvre. La figure 9 représente plus particulièrement une évolution :
8) ; de l'état (SE state) du premier élément 404 (figure
de la tension VCC_OUT d'alimentation des deuxièmes éléments 604 et 606 (figure 8) ; et
de l'état (BIO state) de l'environnement biométrique, c'est-à-dire des deuxièmes éléments 604 et 606.

Selon ce mode de mise en œuvre, les deuxièmes éléments 604 et 606 sont initialement alimentés 902 (External ICs Processing) et le premier élément 404 est dans un état 904 (SE Bio-Processing) où il exécute des traitements biométriques. On suppose alors que le premier élément SE envoie 906 (WTX TX) une demande d'extension de temps au lecteur 100 (figure 1), puis reçoit 908 (WTX RX) une confirmation indiquant que cette demande a été accordée. Durant les opérations 906 et 908 de demande d'extension de temps WTX :
le premier élément 404 (figure 8) est mis en mode basse consommation (SE Standby) ; et
les deuxièmes éléments 604 et 606 (figure 8) sont mis en mode basse consommation 910 (Standby).

Les deuxièmes éléments 604 et 606 ne sont alors, de préférence, pas alimentés depuis le régulateur de tension 806 (figure 8). Par exemple, l'interrupteur 616 piloté par le régulateur de tension 806 est ouvert. Pendant qu'ils sont en mode basse consommation 910, les deuxièmes éléments 604 et 606 sont alimentés, de préférence, par le condensateur 814 (figure 8).

Après la demande d'extension de temps WTX, le premier élément 404 (figure 8) réévalue 912 (RAC), par l'intermédiaire du bloc 802, le courant disponible à partir du champ pour alimenter les deuxièmes éléments 604 et 606. En fonction de l'évaluation réalisée par le bloc 802, par exemple si le courant disponible est suffisant, la carte 602 peut décider de poursuivre l'exécution d'opérations biométriques. Dans ce cas :
le premier élément 404 est remis dans l'état 904 (SE Bio-Processing) ; et
les deuxièmes éléments 604 et 606 sont alimentés 902 (External ICs Processing).

Dans le cas contraire, la carte 602 peut décider d'interrompre l'exécution des opérations biométriques, par exemple en cessant d'alimenter 902 les deuxièmes éléments 604 et 606.

En d'autres termes, le premier élément 404 :
envoie, au lecteur 100 (figure 1), une demande d'extension de temps WTX ;
évalue, pendant l'extension de temps WTX, une puissance disponible à partir du champ électromagnétique EMF rayonné par le lecteur 100 ; et
adapte son alimentation et l'alimentation des deuxièmes éléments 604, 606 en fonction de la puissance disponible.

Selon un mode de mise en œuvre préféré, la puissance disponible est évaluée après d'autres extensions de temps, par exemples semblables à l'extension de temps WTX décrite ci-dessus, l'alimentation du ou des premiers éléments 604, 606 étant adaptée en fonction de chaque évaluation de la puissance disponible.

La figure 10 est encore un autre chronogramme du procédé de gestion d'alimentation de la figure 7 selon un mode de mise en œuvre.

La figure 10 représente plus particulièrement une évolution :
8) ; de l'état (SE state) du premier élément 404 (figure
d'un signal (Harvesting sensor) d'un capteur, par exemple un capteur de la tension VCC_OUT se déclenchant en cas de franchissement d'un seuil haut à partir duquel on considère que l'énergie consommée par les deuxièmes éléments 604 et 606 est trop importante ;
d'un autre signal (SE Interrupt) d'interruption du premier élément 404 ;
de la tension VCC_OUT d'alimentation des deuxièmes éléments 604 et 606 (figure 8) ; et
de l'état (BIO state) de l'environnement biométrique, c'est-à-dire des deuxièmes éléments 604 et 606.

Selon ce mode de mise en œuvre, la macrocellule 608 (figure 6) évalue une capacité d'alimentation globale, c'est-à-dire pour tous les éléments 404, 604, 606 de la carte 602. Cette capacité d'alimentation est ensuite répartie entre le premier élément 404 et les deuxièmes éléments 604 et 606 en fonction d'une consommation maximale de chaque élément.

En cas, par exemple, de dégradation du capteur d'empreintes digitales 606 de la carte 602 (figure 6) ou de fuites au niveau de plots de connexion du microcontrôleur 604, cela peut conduire à une consommation excessive, ou imprévue, du capteur 606 ou du microcontrôleur 604, respectivement. Dans ce cas, le premier élément 404 est avantageusement configuré pour couper l'alimentation des deuxièmes éléments 604 et 606.

Selon ce mode de mise en œuvre, les deuxièmes éléments 604 et 606 sont initialement dans l'état 902 (External ICs Processing) et le premier élément 404 est dans l'état 904 (SE Bio-Processing). On suppose alors que l'on souhaite couper l'alimentation des deuxièmes éléments 604, 606. Le premier élément émet alors une commande 1002 (SE Bio-Abort) de mise hors tension des deuxièmes éléments 604 et 606 puis une demande 1004 (WTX) d'extension de temps. L'exécution de la commande 1002 conduit à la mise hors tension 704 (BIO OFF) des deuxièmes éléments 604, 606. Cela se traduit notamment par le fait que le signal VCC_OUT est, après décharge de la capacité 814 (figure 8), égal à environ 0 V.

Selon ce mode de mise en œuvre, on passe alors de l'état 904, où le premier élément 404 et les deuxièmes éléments 604, 606 sont alimentés, à l'état 702 (SE processing), où seul le premier élément 404 est alimenté. La demande d'extension de temps 1004 permet ici de faire en sorte que la communication entre la carte 602 et le lecteur 100 demeure active et que le premier élément 404 repasse dans l'état 702.

En d'autres termes, la carte 602 est configurée pour donner une priorité d'alimentation (Harvesting priority on SE) au premier élément 404.

Le composant 608 du premier élément 404 de la carte 602 (figure 6) est donc configuré pour évaluer le courant disponible à partir du champ EMF rayonné par le lecteur 100 (figure 1). L'alimentation du premier élément 404 et des deuxièmes éléments 604, 606 est alors ajustée en fonction de cette évaluation de courant. Cet ajustement s'effectue, de préférence :
soit par coupure de l'alimentation des deuxièmes éléments 604 et 606, si le courant disponible n'est pas suffisant pour alimenter convenablement les deuxièmes éléments 604 et 606 tout en conservant une communication opérationnelle entre le premier élément 404 et le lecteur 100 ;
soit par ajustement de l'alimentation du premier élément 404 et des deuxièmes éléments 604, 606 en fonction des besoins d'alimentation de chaque élément.

Les modes de mise en œuvre décrits ci-dessus présentent l'avantage d'être compatibles avec les protocoles actuels de communication entre une carte 602 (figure 6) et un lecteur 100 (figure 1). L'alimentation des deuxièmes éléments 604 et 606 est en particulier gérée par la carte 602 de façon transparente pour le lecteur 100. Ainsi, dans le cas de la carte 602, le premier élément 404 gère des éléments supplémentaires 604, 606 par rapport à la carte 102 (figure 4). Toutefois, le lecteur 100 peut communiquer indifféremment avec la carte 102 ou avec la carte 602 sans que cela n'entraîne de modification en termes de protocole de communication. On peut donc conserver les lecteurs 100 existants pour communiquer avec la carte 602.

Divers modes de réalisation, modes de mise en œuvre et variantes ont été décrits. La personne du métier comprendra que certaines caractéristiques de ces divers modes de réalisation, modes de mise en œuvre et variantes pourraient être combinées, et d'autres variantes apparaîtront à la personne du métier.

Enfin, la mise en œuvre pratique des modes de réalisation, modes de mise en œuvre et variantes décrits est à la portée de la personne du métier à partir des indications fonctionnelles données ci-dessus.

## Revendications

1. Procédé de gestion d'alimentation d'un ou plusieurs premiers éléments (604, 606) par un deuxième élément (404) d'un même premier dispositif (602), comprenant les étapes consistant à :
envoyer, à un deuxième dispositif (100), une demande d'extension de temps (WTX) ;
évaluer, pendant l'extension de temps, une puissance disponible à partir d'un champ électromagnétique (EMF) rayonné par le deuxième dispositif ; et
adapter l'alimentation du deuxième élément et du ou des premiers éléments en fonction de la puissance disponible.

2. Procédé selon la revendication 1, dans lequel le deuxième élément (404) est téléalimenté par l'intermédiaire du champ (EMF) .

3. Procédé selon la revendication 1 ou 2, dans lequel le deuxième élément (404) est un circuit électronique sécurisé.

4. Procédé selon l'une quelconque des revendications 1 à 3, dans lequel le deuxième élément (404) effectue les étapes d'envoi de la demande de l'extension de temps, d'évaluation de la puissance et d'adaptation de l'alimentation.

5. Procédé selon l'une quelconque des revendications 1 à 4, dans lequel le premier dispositif (602) comporte exactement deux premiers éléments (604, 606), les premiers éléments étant, de préférence, un microcontrôleur et un capteur d'empreintes digitales.

6. Procédé selon l'une quelconque des revendications 1 à 5, dans lequel :
le premier dispositif (602) est une carte, de préférence une carte de paiement sans contact ; et
le deuxième dispositif (100) est un lecteur, de préférence un terminal de paiement sans contact.

7. Procédé selon l'une quelconque des revendications 1 à 6, dans lequel le ou les premiers éléments (604, 606) sont alimentés sous une tension (VCC_OUT) comprise entre 1 V et 5,5 V.

8. Procédé selon l'une quelconque des revendications 1 à 7, dans lequel le deuxième élément (404) comporte un composant (608 ; 802) configuré pour évaluer un courant disponible à partir du champ (EMF) rayonné par le deuxième dispositif (100) .

9. Procédé selon l'une quelconque des revendications 1 à 8, dans lequel le deuxième élément (404) comporte un interrupteur (616) configuré pour couper l'alimentation du ou des premiers éléments (604, 606).

10. Procédé selon les revendications 8 et 9, dans lequel l'interrupteur (616) est piloté par un régulateur de tension (806) activé en fonction d'un état du composant (608 ; 802) d'évaluation du courant.

11. Procédé selon la revendication 10, dans lequel le ou les premiers éléments (604, 606) sont alimentés :
par un condensateur (814), lorsque l'interrupteur (616) est ouvert ; et
par le régulateur de tension (806), lorsque l'interrupteur est fermé.

12. Procédé selon l'une quelconque des revendications 9 à 11, dans lequel le deuxième élément (404) ouvre l'interrupteur (616) en cas de consommation excessive du ou des deuxièmes éléments (604, 606).

13. Procédé selon l'une quelconque des revendications 1 à 12, dans lequel le deuxième élément (404) est mis en mode basse consommation (504) pendant l'évaluation de la puissance disponible.

14. Procédé selon l'une quelconque des revendications 1 à 13, dans lequel la puissance disponible est évaluée après d'autres extensions de temps (WTX), l'alimentation du ou des premiers éléments (604, 606) étant adaptée en fonction de chaque évaluation de la puissance disponible.

15. Procédé selon l'une quelconque des revendications 1 à 14, dans lequel, lorsque le ou les premiers éléments (604, 606) sont alimentés, le deuxième élément (404) ajuste une fréquence de fonctionnement du deuxième élément et une fréquence de fonctionnement du ou des premiers éléments en fonction de la puissance disponible.

16. Circuit électronique sécurisé (404) configuré pour mettre en œuvre le procédé selon l'une quelconque des revendications 1 à 15, le circuit comprenant un composant (608 ; 802) configuré pour évaluer un courant disponible à partir du champ (EMF) rayonné par le deuxième dispositif (100) et un interrupteur (616) configuré pour couper l'alimentation du ou des premiers éléments (604, 606).

17. Carte électronique sans contact (602) comprenant au moins un circuit (404) selon la revendication 16.

## Patentansprüche

1. Ein Verfahren zur Verwaltung der Stromversorgung eines oder einer Vielzahl von ersten Elementen (604, 606) durch ein zweites Element (404) eines gleichen ersten Geräts (602), das die folgenden Schritte aufweist:
Senden an ein zweites Gerät (100) einer Zeitverlängerungsanforderung (WTX);
Auswerten, während der Zeitverlängerung, einer verfügbaren Leistung aus einem elektromagnetischen Feld (EMF), das von dem zweiten Gerät abgestrahlt wird; und
Anpassen der Stromversorgung des zweiten Elements und des ersten Elements bzw. der ersten Elemente entsprechend der verfügbaren Leistung.

2. Das Verfahren nach Anspruch 1, wobei das zweite Element (404) über das Feld (EMF) fernversorgt wird.

3. Das Verfahren nach Anspruch 1 oder 2, wobei das zweite Element (404) ein sicherer elektronischer Schaltkreis ist.

4. Das Verfahren nach einem der Ansprüche 1 bis 3, wobei das zweite Element (404) die Schritte des Sendens der Zeitverlängerungsanforderung, des Auswertens der Leistung und des Anpassens der Stromversorgung ausführt.

5. Das Verfahren nach einem der Ansprüche 1 bis 4, wobei das erste Gerät (602) genau zwei erste Elemente (604, 606) aufweist, wobei die ersten Elemente vorzugsweise ein Mikrocontroller und ein Fingerabdrucksensor sind.

6. Das Verfahren nach einem der Ansprüche 1 bis 5, wobei:
das erste Gerät (602) eine Karte ist, vorzugsweise eine kontaktlose Zahlungskarte; und
das zweite Gerät (100) ein Lesegerät ist, vorzugsweise ein kontaktloses Zahlungsterminal.

7. Das Verfahren nach einem der Ansprüche 1 bis 6, wobei das erste Element bzw. die ersten Elemente (604, 606) mit einer Spannung (VCC_OUT) im Bereich von 1 V bis 5,5 V versorgt werden.

8. Das Verfahren nach einem der Ansprüche 1 bis 7, wobei das zweite Element (404) eine Komponente (608; 802) aufweist, die konfiguriert ist, einen Strom auszuwerten, der aus dem Feld (EMF) verfügbar ist, das von dem zweiten Gerät (100) abgestrahlt wird.

9. Das Verfahren nach einem der Ansprüche 1 bis 8, wobei das zweite Element (404) einen Schalter (616) aufweist, der konfiguriert ist, die Stromversorgung des ersten Elements bzw. der ersten Elemente (604, 606) zu unterbrechen.

10. Das Verfahren nach den Ansprüchen 8 und 9, wobei der Schalter (616) von einem Spannungsregler (806) angesteuert wird, der entsprechend einem Zustand der Stromauswertekomponente (608; 802) aktiviert wird.

11. Das Verfahren nach Anspruch 10, wobei das erste Element bzw. die ersten Elemente (604, 606) versorgt werden:
durch einen Kondensator (814), wenn der Schalter (616) ausgeschaltet ist; und
durch den Spannungsregler (806), wenn der Schalter eingeschaltet ist.

12. Das Verfahren nach einem der Ansprüche 9 bis 11, wobei das zweite Element (404) den Schalter (616) im Falle eines übermäßigen Stromverbrauchs des zweiten Elements bzw. der zweiten Elemente (604, 606) ausschaltet.

13. Das Verfahren nach einem der Ansprüche 1 bis 12, wobei das zweite Element (404) während der Auswertung der verfügbaren Leistung in den Modus mit geringem Leistungsverbrauch (504) versetzt wird.

14. Das Verfahren nach einem der Ansprüche 1 bis 13, wobei die verfügbare Leistung nach anderen Zeitverlängerungen (WTX) ausgewertet wird, wobei die Energieversorgung des ersten Elements bzw. der ersten Elemente (604, 606) entsprechend jeder Auswertung der verfügbaren Leistung angepasst wird.

15. Das Verfahren nach einem der Ansprüche 1 bis 14, wobei, wenn das erste Element bzw. die ersten Elemente (604, 606) mit Strom versorgt werden, das zweite Element (404) eine Betriebsfrequenz des zweiten Elements und eine Betriebsfrequenz des ersten Elements bzw. der ersten Elemente entsprechend der verfügbaren Leistung einstellt.

16. Ein sicherer elektronischer Schaltkreis (404), der konfiguriert ist, das Verfahren nach einem der Ansprüche 1 bis 15 zu implementieren, wobei der Schaltkreis eine Stromauswertungskomponente (608; 802) aufweist, die konfiguriert ist, einen Strom auszuwerten, der von dem Feld (EMF) verfügbar ist, das von der zweiten Vorrichtung (100) ausgestrahlt wird, und einen Schalter (616), der konfiguriert ist, die Stromversorgung des ersten Elements bzw. der ersten Elemente (604, 606) zu unterbrechen.

17. Eine kontaktlose elektronische Karte (602) mit mindestens einem Schaltkreis (404) nach Anspruch 16.

## Claims

1. A method of power supply management of one or a plurality of first elements (604, 606) by a second element (404) of a same first device (602), comprising the steps of:
sending, to a second device (100), a time extension request (WTX) ;
evaluating, during the time extension, a power available from an electromagnetic field (EMF) radiated by the second device; and
adapting the power supply of the second element and of the first element(s) according to the available power.

2. The method according to claim 1, wherein the second element (404) is remotely supplied via the field (EMF).

3. The method according to claim 1 or 2, wherein the second element (404) is a secure electronic circuit.

4. The method according to any of claims 1 to 3, wherein the second element (404) carries out the steps of sending the time extension request, of evaluating the power, and of adapting the power supply.

5. The method according to any of claims 1 to 4, wherein the first device (602) comprises exactly two first elements (604, 606), the first elements preferably being a microcontroller and a fingerprint sensor.

6. The method according to any of claims 1 to 5, wherein:
the first device (602) is a card, preferably, a contactless payment card; and
the second device (100) is a reader, preferably a contactless payment terminal.

7. The method according to any of claims 1 to 6, wherein the first element(s) (604, 606) are powered under a voltage (VCC_OUT) in the range from 1 V to 5.5 V.

8. The method according to any of claims 1 to 7, wherein the second element (404) comprises a component (608; 802) configured to evaluate a current available from the field (EMF) radiated by the second device (100).

9. The method according to any of claims 1 to 8, wherein the second element (404) comprises a switch (616) configured to cut off the power supply of the first element(s) (604, 606).

10. The method according to claims 8 and 9, wherein the switch (616) is driven by a voltage regulator (806) activated according to a state of the current evaluation component (608; 802).

11. The method according to claim 10, wherein the first element(s) (604, 606) are powered:
by a capacitor (814), when the switch (616) is off; and
by the voltage regulator (806), when the switch is on.

12. The method according to any of claims 9 to 11, wherein the second element (404) turns off the switch (616) in case of an excessive power consumption of the second element(s) (604, 606).

13. The method according to any of claims 1 to 12, wherein the second element (404) is set to the low power consumption mode (504) during the evaluation of the available power.

14. The method according to any of claims 1 to 13, wherein the available power is evaluated after other time extensions (WTX), the power supply of the first element(s) (604, 606) being adapted according to each evaluation of the available power.

15. The method according to any of claims 1 to 14, wherein, when the first element (s) (604, 606) are powered, the second element (404) adjusts an operating frequency of the second element and an operating frequency of the first element(s) according to the available power.

16. A secure electronic circuit (404) configured to implement the method according to any of claims 1 to 15, the circuit comprising a current evaluation component (608; 802) configured to evaluate a current available from the field (EMF) radiated by the second device (100) and a switch (616) configured to cut off the power supply of the first element(s) (604, 606).

17. A contactless electronic card (602) comprising at least one circuit (404) according to claim 16.
